# FASCICULE DE BREVET EUROPEEN

(11) **EP 1 412 790 B1**
(45) Date de publication et mention de la délivrance du brevet: **19.12.2012**
(21) Numéro de dépôt: 02772455.8
(22) Date de dépôt: 26.07.2002
(51) Int. Cl.: G02B 6/26, G02B 6/24, G02B 6/42

(54) **PERFECTIONNEMENTS AUX FIBRES OPTIQUES LENTILLEES**
VERBESSERUNGEN VON OPTISCHEN FASERN MIT LINSEN
IMPROVEMENTS TO OPTICAL FIBRES PROVIDED WITH A LENS BY PHOTOPOLYMERIZATION AND RELATED NOVEL OPTICAL COMPONENTS

(30) Priorité: 27.07.2001 FR 0110147
(43) Date de publication de la demande: 28.04.2004
(73) Titulaire: Université de Technologie de Troyes, 10010 Troyes Cédex (FR)
(72) Inventeur: ROYER, Pascal, F-10000 Troyes (FR); BACHELOT, Renaud, F-10120 Saint Andre les Vergers (FR); ECOFFET, Carole, F-68100 Mulhouse (FR); LOUGNOT, Daniel-Joseph, F-90100 Chavannes les Grands (FR)
(74) Mandataire: Debay, Yves
(86) Numéro de dépôt international: PCT/FR2002/002678
(87) Numéro de publication internationale: WO 2003/012504

(56) Documents cités:
- EP-A- 0 801 318
- FR-A- 2 734 914
- FR-A- 2 798 740
- US-A- 4 877 717
- US-A- 5 430 813
- US-A- 5 498 444
- US-A- 5 789 742
- COHEN L G ET AL: "MICROLENSES FOR COUPLING JUNCTION LASERS TO OPTICAL FIBERS" APPLIED OPTICS, OPTICAL SOCIETY OF AMERICA,WASHINGTON, US, vol. 13, no. 1, 1974, pages 89-94, XP002022522 ISSN: 0003-6935
- BEAR P D: "Microlenses for coupling single-mode fibers to single-mode thin-film waveguides" APPLIED OPTICS, OPTICAL SOCIETY OF AMERICA,WASHINGTON, US, vol. 19, no. 17, septembre 1980 (1980-09), pages 2906-2904-2909, XP002117843 ISSN: 0003-6935

## Description

La présente invention concerne des fibres optiques lentillées dont les premières réalisations et applications ont fait l'objet de la part des inventeurs d'une précédente demande de Brevet d'invention délivré par l'INPI sous le N° 98 14385 et dont le Titre est: «Nouvelles Fibres optiques lentillées à forte ouverture numérique d'extrémité. Application à la réalisation de nouveaux composants optoéléctroniques Hautes Performances ».

Les fibres optiques lentillées équipées à leurs extrémités de pics polymères transparents permettent notamment des connexions optiques très améliorées entre les fibres optiques elles-mêmes ou entre les libres optiques et des composants actifs et passifs qui leur sont raccordés. Il en résulte la possibilité de réaliser des dispositifs complexes présentant des hautes performances.

Le document FR 2 798 740 divulgue des nouvelles fibres optiques lentillées à forte ouverture numérique d'extrémité et leur application à la réalisation de nouveaux composants optoélectroniques hautes performances. Mais l'enseignement du document FR 2 798 740 se limite à des hauteurs de goutte sensiblement constantes, de l'ordre de 30 microns. La géométrie n'est donc que faiblement contrôlée et ne permet pas de faire varier sensiblement la hauteur de pic. De ce fait, le domaine d'applications est restreint.

Il est également connu par le document INSPEC DATABASE, Accession number 7160288, Ecoffet C. et al., "Integration of polymer elements at the end of optical fibers by free-radical photopolymerization", Symposium H on Molecular Photonics, the 2000 E-MRS Spring Conference, Strasbourg, France, 30 mai - 2 juin 2000, une méthode de photopolymérisation de radicaux libres sur l'extrémité haute d'une fibre optique monomode. Le procédé utilise la lumière visible guidée dans la fibre et permet d'une part, d'introduire, sur l'extrémité de la fibre, une pointe de polymère micrométrique qui peut être visualisé comme une extension du noyau de la fibre et dont les propriétés optique améliorent la capacité intrinsèque de la fibre, particulièrement en termes d'efficacité de couplage d'une source laser. Mais la formation de la pointe est simplement expliquée par autoguidage de la lumière dans la réponse matérielle et photophysique du matériau.

Cependant, les caractéristiques optiques recherchées par les divers concepteurs sont de plus en plus remarquables tandis que des applications, désormais souvent mondialisées, se développent rapidement et nécessitent la mise au point de nouvelles technologies dans de nombreux domaines de l'optique.

Les objectifs généraux de la présente invention concernent, à titre non limitatif, la mise en oeuvre de nouveaux paramètres et processus technologiques permettant une réalisation des pics polymères présentant des caractéristiques générales optimisées à la fois dans le cas des applications avec des fibres optiques monomodes et multimodes, et corrélativement la mise au point de nouveaux dispositifs particulièrement originaux et recherchés par les utilisateurs.

L'invention sera mieux comprise à partir des explications et figures qui suivent :

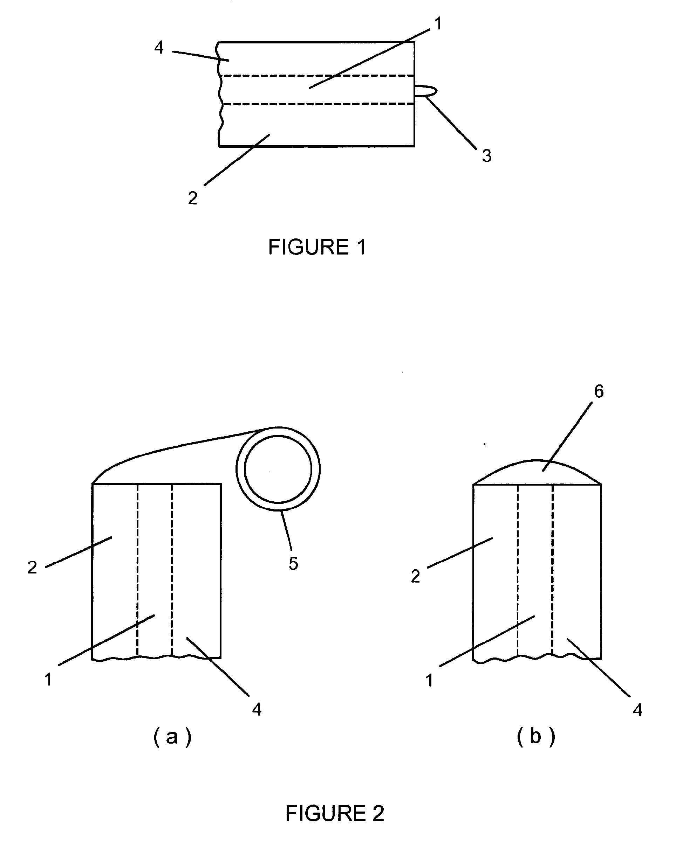

La Figure 1 représente l'extrémité d'une fibre optique 4 comportant un coeur 1 et une gaine 2 équipée d'un pic polymère 3 réalisé à l'aide d'une matière photopolymèrisable du type résine, et dont les dimensions et la géométrie peuvent être ajustées en optimisant de nouveaux paramètres physico-chimiques par exemple, en fonction des applications envisagées.

Suivant un premier objet de l'invention, le processus opératoire mis en oeuvre pour la réalisation des pics permet d'obtenir une grande diversité dans les valeurs de la hauteur (de quelques microns à plusieurs centaines de microns) et du rayon de courbure de la goutte déposée au début du processus. Il en résulte que les dimensions du pic qui dépendent directement de celles de la goutte de formulation peuvent être maîtrisées avec précision, selon les applications souhaitées.

La première opération de réalisation des pics dont un exemple est montré Figure 2, consiste à déposer suivant la Figure 2a une goutte de la formulation à l'aide d'une pipette 5, en extrémité d'une fibre clivée 4 formant instantanément comme le montre la Figure 2b un ménisque de capillarité 6 dont les hauteurs et rayons de courbure de la goutte de formulation sont directement liés au diamètre de la fibre et des tensions de surface (capillarité). Ces valeurs dépendent essentiellement de la viscosité de la formulation utilisée. Dans le cadre de ce premier objet de l'invention, le paramètre de viscosité revêt une importance primordiale. Selon l'invention, la composition chimique de la formulation est d'abord adaptée à la valeur de la viscosité désirée, mais la température de la formulation joue également un rôle essentiel.

Ainsi, on réduira la hauteur de la goutte déposée en chauffant légèrement la formulation qui rendra celle-çi moins visqueuse. Inversement, on refroidira préalablement la goutte déposée pour rendre la formulation plus visqueuse et obtenir une hauteur de goutte plus élevée. A titre d'exemple, une variation de température de la résine constituant la formulation, comprise entre 10°C et 65°C, permet d'obtenir des gouttes dont la hauteur est comprise entre 10 et 50 microns.

D'un point de vue général, il a été déjà précisé dans le texte de la première protection industrielle des inventeurs que la formulation photopolymérisable permettant de réaliser le pic en extrémité de fibre se comporte comme un matériau liquide, sensible à la lumière verte et composé de photoinitiateurs (éosine + MDEA) et d'un monomère (PETIA).

Selon les perfectionnements objets de notre invention, les photoinitiateurs peuvent être modifiés pour que la formulation soit sensible aux longueurs d'onde plus élevées que celle correspondant à la lumière verte, soit la lumière rouge, proche infrarouge et plus précisément aux longueurs d'onde largement utilisées dans le domaine des télécommunications (1,3 et 1,55 µm par exemple)

Suivant un autre aspect du premier objet de l'invention, les tensions de surface, directement liées à la viscosité de la formulation, peuvent être également modifiées en effectuant sur la fibre un pré-traitement avant de déposer la goutte. Celui-çi consiste préférentiellement, mais à titre non limitatif, à tremper la fibre optique clivée dans de l'acide sulfochromique pendant 24 heures. La surface de la fibre est rendue hydrophile, et le phénomène de capillarité atténué, conduit à une hauteur de goutte faible, (par exemple 10 microns.)

La largeur finale du pic dépend du diamètre du coeur de la fibre qui guide dans sa quasi totalité la lumière, généralement verte, à l'extrémité de la fibre où a été déposée la goutte de formulation.

Les conditions d'exposition de la lumière, notamment la valeur de l'intensité lumineuse polymérisante et son temps d'application constituent également des paramètres importants qui sont à ajuster en fonction des besoins.

Le rayon de courbure final du pic à réaliser, beaucoup plus faible que le rayon de courbure de la goutte est primordial pour obtenir les caractéristiques lentillées souhaitées pour le pic. Ce rayon de courbure peut être ajusté en fonction du temps d'exposition (à titre d'exemple non limitatif: 0,5 à 90 secondes) et de l'intensité de la lumière photopolymérisante injectée dans la fibre (intensité de sortie de la fibre, de 1 à 100 µwatts à titre d'exemple non limitatif).

Le rayon de courbure du pic dépend également des effets d'oxygène à l'interface goutte/air. Selon l'invention, les effets d'oxygène sont contrôlés en ajustant la composition de l'air au voisinage du champ opératoire. A titre non limitatif, on injecte de l'azote dans un compartiment étanche du type boîte à gants dans lequel l'extrémité de la fibre est introduite.

Selon ce premier objet de l'invention, le processus opératoire et les divers paramètres du pic concernés ont non seulement été optimisés dans le but de bien maîtriser la réalisation des divers pics et leurs caractéristiques recherchées suivant les nombreuses applications possibles, mais également dans l'objectif de mettre au point un procédé simple et peu onéreux de réalisation permettant une « fabrication de masse » des pics d'extrémités des fibres.

Suivant un aspect non limitatif du premier objet de l'invention, le rayonnement laser nécessaire à la photopolymérisation est, après élargissement et homogénéisation du faisceau optique par des procédés optiques connus, réparti en un grand nombre de fibres optiques destinées à être équipées d'un pic d'extrémité.

La puissance optique nécessaire à la photopolymérisation étant seulement de quelques microwatts par pic, une « fabrication de masse » de plus de 100 pics simultanément, à titre non limitatif est possible selon notre invention.

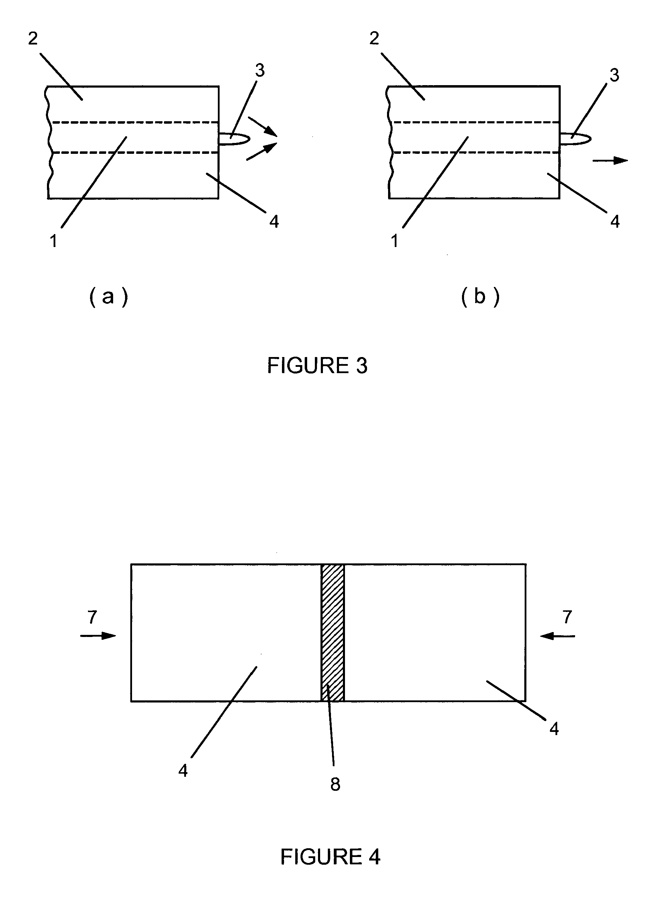

Suivant un deuxième objet de l'invention et conformément à la Figure 3, on applique l'essentiel des technologies et processus précédents, améliorés selon le premier objet de l'invention, aux fibres multimodes pour réaliser des composés fibrés fournissant un faisceau soit focalisé (Figure 3a) soit collimaté (Figure 3b).

Dans le cas des fibres multimodes, la lumière incidente initialisant la polymérisation provient préférentiellement d'une source extérieure à la fibre multimodes associée à des composants de mise en forme du faisceau délivré par la source.

La photopolymérisation s'effectue alors sans propagation longitudinale de la lumière polymérisante dans la fibre multimodes elle-même. On évite ainsi d'éclairer la formulation avec l'ensemble des divers modes transverses se propageant dans les fibres multimodes lorsque la lumière photopolymérisante est injectée à l'extrémité des fibres.

Dans ce cas, la géométrie de la microlentille fabriquée est proche de celle de la goutte de formulation qui a été préalablement déposée.

Selon d'autres aspects du deuxième objet de l'invention et lorsque certaines applications nécessitent que la géométrie du pic soit indépendante de la distribution d'intensité des modes de la fibre, on peut fabriquer le pic polymère en couplant à l'autre extrémité de la fibre une source de lumière blanche délivrant une lumière incohérente et choisie de telle sorte que le spectre de longueurs d'ondes émis est compatible avec les divers modes pouvant se propager dans la fibre. Dans le cas également de certaines applications qui nécessitent des installations compactes où la présence d'une source de lumière monochromatique placée à proximité de l'extrémité de la fibre multimodes donc du pic à réaliser, est difficile à envisager pour des raisons d'emplacement ou plus généralement par suite d'une disposition complexe de l'ensemble de l'équipement de réalisation des pics, la source de lumière photopolymérisante utilisée est également à titre non limitatif une source de lumière blanche incohérente.

Suivant un troisième objet de l'invention, les diverses améliorations apportées décrites dans les objets un et deux de l'invention et associées à la connaissance correspondante approfondie des propriétés des pics en fonction des conditions de leur réalisation, des techniques générales de raccordement d'éléments optiques ont été élaborées et sont applicables pour de nombreuses applications.

Les principaux types de raccordement selon l'invention et donnés à titre non limitatif sont représentés sur les Figures qui suivent.

La Figure 4 montre un type de raccordement fibre à fibre monomode ou multimodes.

La lumière photopolymérisante 7 est injectée aux extrémités des 2 fibres 4 à raccorder et alignées. Le contact entre les fibres est assuré par une formulation polymère sous forme d'un film 8 réalisé suivant le même processus technologique revendiqué pour la réalisation des pics. On obtient ainsi une soudure « froide » complétée par une gaine optique telle qu'une colle dont l'indice est inférieur à celui du film, et par une gaine de protection mécanique. Les pertes d'insertion d'un tel raccordement peuvent être aussi basses que 0,1 dB.

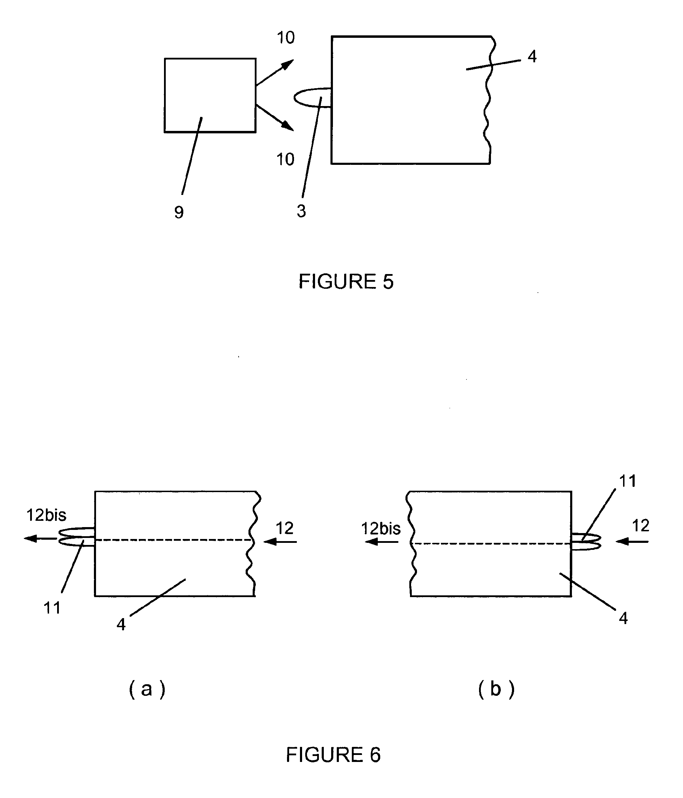

La Figure 5 montre schématiquement un type de raccordement d'une diode laser 9 à une fibre optique 4.

Dans ce type de raccordement, le pic 3 réalisé en extrémité de la fibre 4 est dimensionné de telle sorte que le couplage entre le rayonnement du laser 10 et le pic 3 soit maximum.

Les raccordements montrés sur les Figures 4 et 5 ne sont donnés qu'à titre d'exemple et sont donc non exhaustifs.

Dans le cadre de ce troisième objet de l'invention, le raccordement de guides d'onde optiques intégrés, par exemple, malgré le nombre et la complexité des circuits optoélectroniques qu'ils comportent peut s'effectuer suivant les mêmes technologies d'une grande simplicité décrites plus avant.

Suivant un quatrième objet de l'invention, on réalise en extrémité des fibres multimodes des pics ne pouvant propager qu'un ou plusieurs modes.

Avant exposition lumineuse de la goutte de formulation, on sélectionne le ou les modes désirés en soumettant la fibre multimodes à des contraintes mécaniques et en modifiant les conditions d'injection de la lumière verte jusqu'à l'obtention du ou des modes désirés.

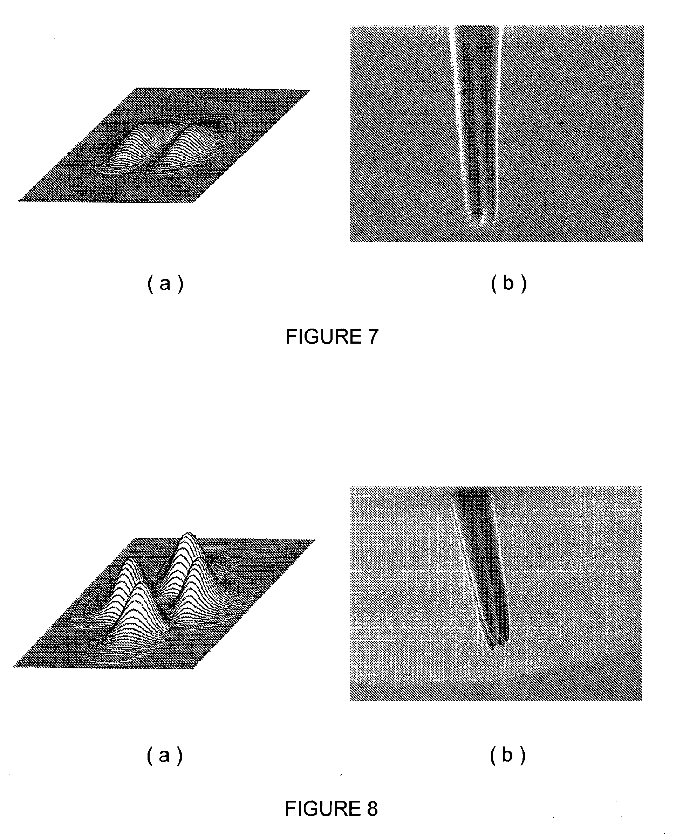

A titre d'exemple montré sur la Figure 6 on a réalisé (Figure 6a) sur une fibre de 9 microns de coeur un double pic polymère 11 ne transmettant à partir d'un rayonnement 12, que le mode LP 11 de la fibre 4. La distribution d'intensité 12 bis transmise par le double pic 11 est montrée sur la Figure 7a, c'est la même distribution d'intensité qui a permis la fabrication du double pic 11. La Figure 7b montre l'élément polymère à double pic après sa fabrication.

A l'inverse, le pic polymère 11 peut être utilisé comme « entrée » d'une fibre éclairée par un faisceau de lumière incident 12 (Figure 6b), l'énergie lumineuse est transmise par le pic 11 dans la fibre multimodes suivant une répartition spatiale correspondant au mode LP 11, dans le cas de l'exemple choisi. Seul le mode LP 11 est excité dans la fibres et ce, quelques soient les conditions d'injection dans la fibre.

Suivant un autre exemple de réalisation, un multipic polymère a été fabriqué permettant de sélectionner le mode LP 21 sur une fibre multimodes de diamètre de coeur 9 microns. La distribution d'intensité en sortie de la fibre dans laquelle la lumière 12 a été injectée suivant le mode LP 21 par le pic est représentée Figure 8a. La Figure 8b montre l'élément polymère à 4 pics après sa fabrication.

Selon notre invention, il est ainsi possible de réaliser des «Filtrages de modes transverses » et plus généralement de nouveaux dispositifs appelés « Sélecteur de modes».

Suivant un cinquième objet de l'invention, on utilise les nouvelles fibres optiques lentillées optimisées suivant l'invention, comme sondes de mesure des rayonnements optiques, présentant une grande résolution du type submicronique.

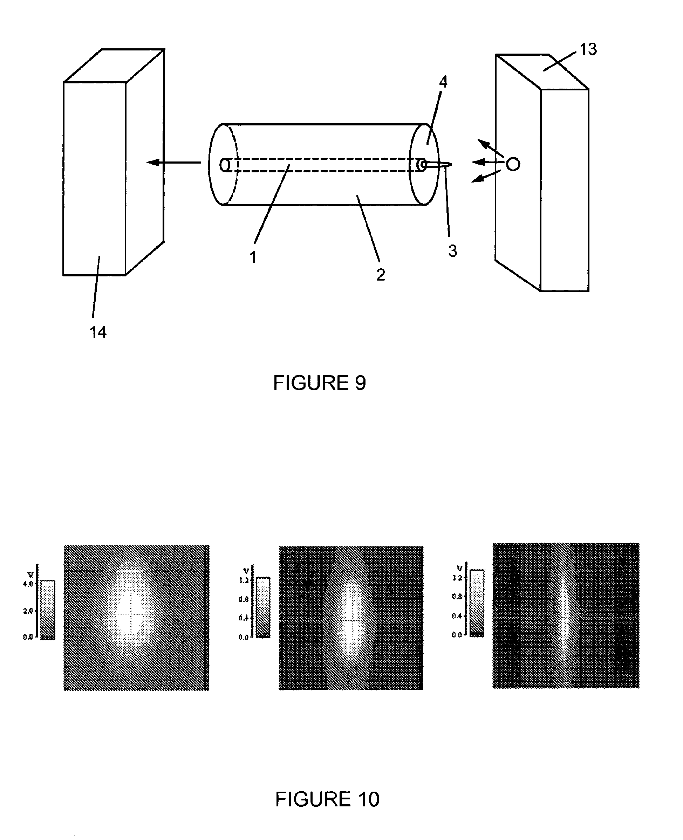

A titre d'exemple d'utilisation de ces nouvelles sondes, la Figure 9 montre schématiquement selon l'invention, un mesureur de l'énergie émise par un laser 13 et notamment la configuration des courbes de champ optique en sortie du laser.

Le laser 13 utilisé dans l'expérimentation est une diode laser commercialisée par la Société SHARP présentant une couche active de largeur 200 µm.

L'extrémité de la fibre optique lentillée 4 équipée de son pic 3 est déplacée successivement suivant 3 plans situés respectivement à des distances de la diode de 2,5 µm, 1 µm et 0,1 µm.

L'autre extrémité non lentillée de la fibre 4 est réunie à un photomultiplicateur 14 augmentant la sensibilité de la mesure.

La Figure 10 montre les images optiques du rayonnement de la diode laser relevées aux 3 distances 2,5, 1 et 0,1 µm, la fibre optique lentillée étant déplacée à l'intérieur d'une surface de 8 x 8 µm². On peut noter sur la Figure 10 que plus la distance du pic à la diode laser est faible, plus la couche active du laser est visible. Par ailleurs, pour une distance, par exemple de 2,5 µm du pic à la surface de la fibre 4, on peut nettement distinguer les courbes de niveaux optiques progressivement décroissants.

Selon un sixième objet de l'invention, certaines optimisations, suivant l'invention, des fibres optiques lentillées sont particulièrement axées sur les applications de ces fibres en microscopie et dans la réalisation des sondes de mesure correspondantes.

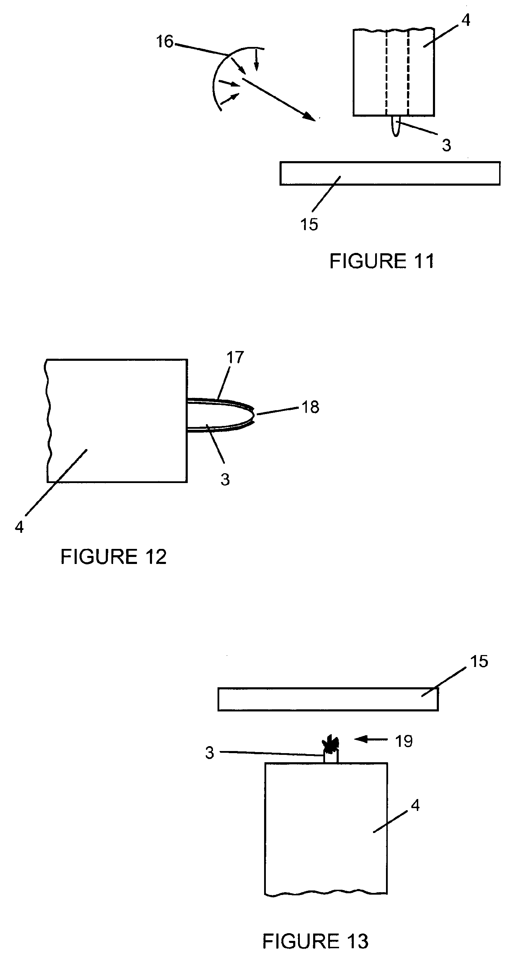

Dans le cas de la microscopie optique à balayage classique, on utilise comme il est montré sur la Figure 11 les nouvelles fibres optiques lentillées comme sonde de mesure de la lumière diffusée par la surface d'un objet éclairé 15 par une source extérieure 16. Le déplacement de la fibre optique lentillée au dessus de l'objet permet de réaliser une image optique de la zone étudiée.

On peut ainsi réaliser une microscopie optique à balayage haute résolution avec une sonde simple et très bas coût. Des résolutions de 300 à 500 nm peuvent couramment être obtenues.

Dans le cas des applications de microscopie optique en champ proche, le pic polymère d'une fibre lentillée optimisée suivant l'invention est comme montré sur le Figure 12 entièrement métallisé à l'exception d'une nano-ouverture circulaire 18 aménagée dans la métallisation 17 dont le diamètre typique est de quelques dizaines de nanomètres. Cette nano-ouverture reste capable d'émettre ou de recevoir la lumière dans les expériences de microscopie optique en champ proche. Une telle fibre lentillée, à pic métallisé joue le rôle général de nanosource ou de nano-collecteur selon les besoins.

La nature du métal utilisé, recouvrant la presque totalité du pic est préférentiellement, mais à titre non limitatif du chrome ou de l'or.

Selon une variante de sonde de nature submicronique, montrée sur la Figure 13, on intégre des particules fluorescentes 19 à la formulation photopolymérisable afin d'obtenir une extrémité de pic contenant quelques particules dont l'excitation optique sélective améliore la résolution spatiale en microscopie optique. La dimension des particules fluorescentes rajoutées à la formulation sont de taille submicromique. La concentration des particules est ajustée pour obtenir après formation du pic, une ou quelques particules en extrémité de pic. La fluorescence des particules est ensuite excitée sélectivement, via la fibre afin de disposer d'une source de lumière 15 localisée capable de sonder, en champ proche, les propriétés optiques d'un échantillon avec une résolution submicronique.

Le type de sonde à particules, suivant l'un des objets de notre invention permet l'utilisation d'un processus simple et fiable.

Dans le cadre du sixième objet de l'invention, les sondes métallisées décrites plus avant mais sans nano-ouverture peuvent être utilisées comme capteurs à plasmons de surface. Une fibre optique lentillée monomode ou multimodes améliorée suivant l'invention est employée.

Le pic polymère est revêtu d'une fine métallisation préférentiellement à l'or ou à l'argent.

En injectant de la lumière dans l'autre extrémité clivée de la fibre et en se plaçant dans des conditions d'excitation de plasmons de surface à l'interface métal-air, il est possible de modifier les caractéristiques de plasmons par variation de l'indice optique du milieu extérieur. Ainsi la présence de substances chimiques ou biologiques en contact avec la couche métallique va provoquer des modifications des propriétés optiques des plasmons, donc des variations du signal lumineux transmis ou réfléchi par l'extrémité de la fibre équipée du pic polymère métallisé.

## Revendications

1. Procédé de fabrication de fibres optiques lentillées monomodes ou multimodes à partir d'une fibre multimodes par formation d'au moins un pic (3, 11) d'extrémité en polymère transparent, comprenant une étape de dépôt à au moins une extrémité de fibre optique multimodes, sous forme d'une goutte, d'un mélange fluide incluant une substance de base photopolymérisable et au moins un photoinitiateur de polymérisation puis une étape d'exposition de la goutte déposée à une source lumineuse agencée pour fournir une lumière photopolymérisante (7) incidente sur le mélange fluide, **caractérisé en ce que**:
l'étape d'exposition est soit réalisée par injection de la source lumineuse dans ladite fibre optique multimodes et associée à une étape de sélection du ou des mode(s) désiré(s) est réalisée en soumettant la fibre optique multimodes à au moins une contrainte mécanique, en modifiant les conditions d'injection de la source lumineuse, soit réalisée par exposition de la goutte à une source lumineuse extérieure a ladite fibre et associée à des composants de mise en forme du faisceau délivré par cette source;
un contrôle de la géometrie et des dimensions dudit au moins un pic (3,11) est réalisé à la fois lors desdites étapes de dépôt et d'exposition de la goutte de façon à obtenir une hauteur de pic déterminée entre quelques microns et plusieurs centaines de microns;
- une étape de conditionnement du mélange à une température déterminée est réalisée pour donner au mélange une viscosité adaptée permettant d'atteindre une hauteur de goutte désirée avant t'étape d'exposition;
- une étape de réglage de la durée d'exposition et/ou de l'intensité de la lumière photopolymérisante est réalisée pour ajuster le rayon de courbure final dudit au moins un pic (3,11).

2. Procédé de fabrication de fibres optiques lentilleés monomodes ou multimodes selon la revendication 1, dans lequel une étape d'ajustage de la composition de l'air au voisinage du champ opératoire est également réalisée pour ajuster le rayon de courbure final dudit au moins un pic (3,11), de l'azote étant injecté dans un compartiment étanche pour contrôler les effets d'oxygène à l'interface goutte/air sur le rayon de courbure dudit au moins un pic (3,11).

3. Procédé de fabrication de fibres optiques lentillées monomodes ou multimodes selon la revendication 1 ou 2, **caractérisé en ce qu'**il comprend une étape de prétraitement des fibres pour attenuer les phénomènes de capillarité liés aux tensions de surface et obtenir ainsi des faibles hauteurs de goutte

4. Procédé de fabrication de fibres optiques lentillées monomodes ou multimodes selon l'une des revendications 1 à 3, dans lequel, lorsque la photopolymérisation nécessaire à la formation dudit au moins un pic (3,11) est obtenue par une source extérieure à la fibre multimodes, la lumière polymérisante (7) est délivrée à proximité directe dudit au moins un pic (3,11), préférentiellement sans injection de lumière à l'extrémité des fibres se propageant longitudinalement dans les fibres.

5. Procédé de fabrication de fibres optiques lentillées monomodes ou multimodes selon l'une des revendications 1 à 4, dans lequel le contrôle des dimensions dudit au moins un pic (3, 11) et la géometrie dudit au moins un pic (3, 11) permet l'obtention de faisceaux focalisés ou collimatés

6. Procédé de fabrication selon la revendication 1, dans lequel le contrôle des dimensions et de la géometrie dudit au moins un pic (3, 11) permet la réalisation de raccordements de fibres la lumière photopolymérisante (7) étant injectée lors de ladite étape d'exposition aux extrémités des deux fibres à raccorder pour former un film (8) assurant le contact entre les fibres.

7. Procédé, de fabrication de fibres optiques lentillées monomodes ou multimodes selon l'une des revendications 1 à 5, dans lequel les dimensions et la géometrie dudit au moins un pic (3, 11) sont Choisies pour obtenir un couplage optique maximum entre une fibre (4) et une diode laser (9).

8. Procédé de fabrication de fibres optiques lentillées monomodes ou multimodes selon l'une des revendications 1 à 5, dans lequel lesdites étapes sont adapées afin de permettre que les fibres soient utilisées pour le raccordement de guides d'onde optiques intégrés ledit au moins un pic (3, 11) de chacune des fibres utilisées dans les raccordements étant ajusté séparément selon les besoins.

9. Procédé de fabrication de fibres optiques lentillées monomodes ou multimodes selon l'une des revendications 1 à 5, dans lequel ledit au moins un pic (3, 11) est optimisé pour l'utilisation comme sonde de mesure de rayonnements optiques qui permet l'obtention d'une résolution spatiale latérale de type submicronique, pour des applications de microscopie optique à balayage haute résolution.

10. Procédé de fabrication de fibres optiques lentillées monomodes ou multimodes selon l'une des revendications 1 à 5 et 9, dans lequel des particules fluorescentes (19) sont intégrées à la formulation polymésisable dudit au moins un pic (3, 11), qui se comporte après photopolymérisation comme une source de lumière localisée en extrémité dudit au moins un pic (3, 11) et constituée par une ou plusieurs particule(s) fluorescente(s) (19) suffisante(s) pour sonder, en champ proche, les propriétés optiques d'un échantillon.

11. Procédé de fabrication de fibres optiques lentillées monomodes ou multimodes selon l'une des revendications 1 à 5 et 9, dans lequel une couche métallique (17) est déposée sur ledit au moins un pic polymère (3, 11) à l'exception d'une nano-ouverture (18) circulaire réalisée en extrémité dudit au moins un pic (3,11).

12. Procédé de fabrication de fibres optiques lentillées monomodes ou multimodes selon l'une des revendications 1 à 5 et 9, dans lequel une couche métallique (17) est déposée sur ledit au moins un pic polymère (3,11), ledit au moins un pic (3, 11) ainsi métallisé sans nano-ouverture étant utilisé comme capteur à plasmons de surface dont les caractéristiques sont modifiées par variation de l'indice optique du milieu extérieur en présence, par exemple, de substances chimiques ou biologiques en contact avec la métallisation dudit au moins un pic (3, 11).

13. Procédé de fabrication de fibres optiques lentillées monomodes ou multimodes selon l'une des revendications 1 à 12, dans lequel les photoinitiateurs de polymérisation de la formulation sont sensibles aux longueurs d'onde rouge et proche infrarouge.

14. Procédé de fabrication de fibres optiques lentillées monomodes ou multimodes selon l'une des revendications 1 à 13, dans lequel l'étape d'exposition est réalisée par injection de la source lumineuse dans ledite fibre, et dans une sélection d'un ou plusieurs mode(s) est réalisée avant l'exposition lumineuse de la goutte de formulation pour réaliser de nouveaux dispositifs appelés «Sélecteurs de mode» grâce audit au moins un pic (3, 11) ne propageant que ce(s) mode(s) sélectionné(s).

15. Procédé de raccordement de fibre optique monomode ou multimodes, par formation en extrémité de fibre multimodes d'au moins un pic (3, 11) d'extrémité en polymère transparent, en utilisant le procédé de la revendication 1

16. Procédé de raccordement selon la revendication 15, dans lequel le contrôle des dimensions et de la géométrie dudit au moins un pic (3, 11) permet la réalisation de raccordements de fibres la lumière photopolymérisante (7) étant injectée lors de ladite étape d'exposition aux extrémités des deux fibres à raccorder pour former un film (8) assurant le contact entre les fibres.

17. Procédé de raccordement selon la revendication 15, dans lequel les dimensions et la géométrie dudit au moins un pic (3, 11) sont choisies pour obtenir un couplage optique maximum entre une fibre (4) et une diode laser (9).

## Claims

1. Method of manufacture of monomode or multimode lensed optical fibres from a multimode fibre by formation of at least one end tip (3, 11) from transparent polymer, comprising a step of depositing at least at one end of a multimode optical fibre, in the form of a drop, a fluid mixture including a photopolymerisable base substance and at least one polymerisation photoinitiator, then a step of exposure of the deposited drop to a light source arranged in order to provide a photopolymerising light (7) incident on the fluid mixture, **characterised in that**:
the step of exposure is either carried out by injection of the light source into the said multimode optical fibre and associated with a step of selection of the desired mode(s) is carried out by subjecting the multimode optical fibre to at least one mechanical stress, by modifying the conditions of injection of the light source, or this step is carried out by exposure of the drop to a light source outside the said fibre and associated with components for shaping the beam delivered by this source;
- control of the geometry of the dimensions of the said at least one tip (3, 11) is carried out at the time of the said steps of deposition and of exposure of the drop in such a way as to obtain a specified height of the tip between several microns and several hundred microns;
- a step of conditioning of the mixture at a specified temperature is carried out in order to give the mixture an adapted viscosity making it possible to achieve a desired drop height before the step of exposure;
- a step of adjustment of the duration of exposure and/or of the intensity of the photopolymerising light is carried out in order to set the final radius of curvature of the said at least one tip (3, 11).

2. Method of manufacture of monomode or multimode lensed optical fibres as claimed in Claim 1, wherein a step of adjustment of the composition of the air in the vicinity of the operational area is likewise carried out in order to set the final radius of curvature of the said at least one tip (3, 11), nitrogen being injected into a leakproof compartment in order to control the effects of oxygen at the drop/air interface on the radius of curvature of the said at least one tip (3, 11).

3. Method of manufacture of monomode or multimode lensed optical fibres as claimed in Claim 1 or 2, **characterised in that** it comprises a step of pre-treatment of fibres in order to mitigate the phenomena of capillarity linked to the surface tensions and thus to obtain low drop heights.

4. Method of manufacture of monomode or multimode lensed optical fibres as claimed in any one of Claims 1 to 3, wherein, when the photopolymerisation necessary for the formation of the said at least one tip (3, 11) is obtained by a source outside the multimode fibre, the polymerising (7) light is delivered in immediate proximity to the said at least one tip (3, 11), preferably without injection of light at the end of the fibres propagating longitudinally in the fibres.

5. Method of manufacture of monomode or multimode lensed optical fibres as claimed in any one of Claims 1 to 4, wherein the control of the dimensions of the said at least one tip (3, 11) and the geometry of the said at least one tip (3, 11) makes it possible to obtain focused or collimated beams.

6. Method of manufacture as claimed in Claim 1, wherein the control of the dimensions and of the geometry of the said at least one tip (3, 11) enable the production of connections of fibres, the photopolymerising light (7) being injected during the said step of exposure at the end of the two fibres to be connected in order to form a film (8) which ensures the contact between the fibres.

7. Method of manufacture of monomode or multimode lensed optical fibres as claimed in any one of Claims 1 to 5, wherein the control of the dimensions of the said at least one tip (3, 11) are chosen in order to obtain maximum optical coupling between a fibre and a laser diode.

8. Method of manufacture of monomode or multimode lensed optical fibres as claimed in any one of Claims 1 to 5, wherein the said steps are adapted in order to enable the fibres to be used for the connection of integrated optical waveguides, the said at least one tip (3,11) of each of the fibres used in the connections being adjusted separately as required.

9. Method of manufacture of monomode or multimode lensed optical fibres as claimed in any one of Claims 1 to 5, wherein the said at least one tip (3, 11) is optimised for use as an optical radiation measuring probe which makes it possible to obtain a literal spatial resolution of the sub-micron type, for high resolution optical scanning microscopy applications.

10. Method of manufacture of monomode or multimode lensed optical fibres as claimed in any one of Claims 1 to 5, wherein fluorescent particles (19) are integrated into the polymerisable formulation of the said at least one tip (3, 11), which after photopolymerisation behaves as a light source located in the end of the said at least one top (3, 11) and consisting of one or more fluorescent particle(s) (19) sufficient to probe the optical properties of a sample in a near field.

11. Method of manufacture of monomode or multimode lensed optical fibres as claimed in any one of Claims 1 to 5 and 9, wherein a metal coating (17) is deposited on the said at least one polymer tip (3, 11) with the exception of a circular nano-aperture (18) produced at the end of the said at least one tip (3, 11).

12. Method of manufacture of monomode or multimode lensed optical fibres as claimed in any one of Claims 1 to 5 and 9, wherein a metal coating (17) is deposited on the said at least one polymer tip (3, 11), the said at least one tip (3, 11) thus metallised without a nano-aperture being used as s surface plasmon sensor of which the characteristics are modified by variation of the optical index of the external medium in the presence for example of chemical or biological substances in contact with the metallisation of the said at least one tip (3, 11).

13. Method of manufacture of monomode or multimode lensed optical fibres as claimed in any one of Claims 1 to 12, wherein the polymerisation photoinitiators of the formulation are sensitive to red and near infrared light wavelengths.

14. Method of manufacture of monomode or multimode lensed optical fibres as claimed in any one of Claims 1 to 13, wherein the step of exposure is carried out by injection of the light source into the said fibre, and wherein a selection of one or more mode(s) is made before the exposure to light of the drop of formulation using the method of Claim 1 in order to produce novel devices called "mode selectors" by means of at least one tip (3, 11) only propagating the selected mode(s).

15. Method of connection of monomode or multimode optical fibres by formation at the end of a multimode fibre of at least one transparent polymer end tip (3, 11).

16. Method of manufacture as claimed in Claim 15, wherein the control of the dimensions of the geometry of the said at least one tip (3, 11) enables the production of connections of fibres, the photopolymerising light (7) being injected during the said step of exposure at the ends of the two fibres to be connected in order to form a film (8) which ensures the contact between the fibres.

17. Method of manufacture as claimed in Claim 15, wherein the dimensions of the said at least one tip (3, 11) are chosen in order to obtain maximum optical coupling between a fibre (4) and a laser diode (9).

## Patentansprüche

1. Verfahren zur Herstellung von mit Linsen versehenen Monomoden- oder Multimoden-Lichtleitfasern von einer Multimodenfaser durch Bilden von wenigstens einer Endspitze (3, 4, 11) aus einem transparenten Polymer, das einen Schritt des Absetzens, auf wenigstens ein Ende der Multimoden-Lichtleitfaser, eines fluiden Gemischs in Form eines Tropfens, das eine photopolymerisierbare Basissubstanz und wenigstens einen Polymerisations-Photoinitiator enthält, und dann einen Schritt des Belichtens des abgesetzten Tropfens mit einer Lichtquelle beinhaltet, die auf das fluide Gemisch fallendes fotopolymerisierendes Licht (7) zuführt, **dadurch gekennzeichnet, dass**:
- der Belichtungsschritt entweder durch Injektion der Lichtquelle in die genannte Multimoden-Lichtleitfaser realisiert wird und mit einem Schritt des Auswählens der und von gewünschten Mode(n) assoziiert ist wird realisiert durch Unterziehen der Multimoden-Lichtleitfaser wenigstens einer mechanischen Belastung, durch Modifizieren der Lichtquelleninjektionsbedingungen, oder durch Belichten des Tropfens mit einer externen Lichtquelle auf die Faser realisiert und mit Komponenten zum Formen des von dieser Quelle zugeführten Strahls assoziiert ist;
- eine Kontrolle von Geometrie und Abmessungen der genannten wenigstens einen Spitze (3, 11) gleichzeitig während der genannten Schritte des Absetzens und des Belichtens des Tropfens erfolgt, um eine bestimmte Spitzenhöhe im Bereich von einigen Mikron bis zu mehreren hundert Mikron zu erzielen;
- ein Schritt des Konditionierens des Gemischs auf eine bestimmte Temperatur ausgeführt wird, um dem Gemisch eine angepasste Viskosität zu verleihen, um eine gewünschte Tropfenhöhe vor dem Belichtungsschritt zu erzielen;
- ein Schritt des Regelns der Belichtungsdauer und/oder der Intensität des fotopolymerisierenden Lichts ausgeführt wird, um den Endkrümmungsradius der genannten wenigstens einen Spitze (3, 11) zu justieren.

2. Verfahren zur Herstellung von mit Linsen versehenen Monomoden- oder Multimoden-Lichtleitfasern nach Anspruch 1, bei dem auch ein Schritt des Justierens der Zusammensetzung der Luft in der Nähe des Operationsfeldes zum Justieren des Endkrümmungsradius der genannten wenigstens einen Spitze (3, 11) ausgeführt wird, wobei Stickstoff in eine dichte Kammer injiziert wird, um die Auswirkungen von Sauerstoff an der Tropfen/Luft-Grenzfläche auf den Krümmungsradius der wenigstens einen Spitze (3, 11) zu kontrollieren.

3. Verfahren zur Herstellung von mit Linsen versehenen Monomoden- oder Multimoden-Lichtleitfasern nach Anspruch 1 oder 2, **dadurch gekennzeichnet, dass** es einen Schritt des Vorbehandelns der Fasern zum Dämpfen der Kapillaritätsphänomene beinhaltet, die mit den Oberflächenspannungen verbunden sind, und um so geringe Tropfenhöhen zu erzielen.

4. Verfahren zur Herstellung von mit Linsen versehenen Monomoden- oder Multimoden-Lichtleitfasern nach einem der Ansprüche 1 bis 3, bei dem, wenn die für die Bildung der genannten wenigstens einen Spitze (3, 11) nötige Fotopolymerisation durch eine Quelle außerhalb der Multimodenfaser erzielt wird, das polymerisierende Licht (7) in direkter Proximität zu der genannten wenigstens einen Spitze (3, 11) zugeführt wird, vorzugsweise ohne dass sich auf das Ende von Fasern injiziertes Licht in Längsrichtung in den Fasern ausbreitet.

5. Verfahren zur Herstellung von mit Linsen versehenen Monomoden- oder Multimoden-Lichtleitfasern nach einem der Ansprüche 1 bis 4, wobei es die Kontrolle der Abmessungen der genannten wenigstens einen Spitze (3, 11) und der Geometrie der genannten wenigstens einen Spitze (3, 11) ermöglicht, gebündelte oder kollimierte Strahlen zu erhalten.

6. Herstellungsverfahren nach Anspruch 1, bei dem es die Kontrolle von Abmessungen und Geometrie der genannten wenigstens einen Spitze (3, 11) ermöglicht, Faseranschlüsse vorzunehmen, wobei das polymerisierende Licht (7) während des genannten Schritts des Belichtens an den Enden der beiden Fasern injiziert wird, um einen Film (8) zu bilden, der den Kontakt zwischen den Fasern gewährleistet.

7. Verfahren zur Herstellung von mit Linsen versehenen Monomoden- oder Multimoden-Lichtleitfasern nach einem der Ansprüche 1 bis 5, bei dem Abmessungen und Geometrie der genannten wenigstens einen Spitze (3, 11) so gewählt werden, dass eine maximale optische Kopplung zwischen einer Faser (4) und einer Laserdiode (9) erhalten wird.

8. Verfahren zur Herstellung von mit Linsen versehenen Monomoden- oder Multimoden-Lichtleitfasern nach einem der Ansprüche 1 bis 5, bei dem die genannten Schritte so angepasst werden, dass zugelassen wird, dass die Fasern für den Anschluss von integrierten optischen Wellenleitern verwendet werden, wobei die genannte wenigstens eine Spitze (3, 11) von jeder der in den Anschlüssen verwendeten Fasern separat je nach Bedarf justiert wird.

9. Verfahren zur Herstellung von mit Linsen versehenen Monomoden- oder Multimoden-Lichtleitfasern nach einem der Ansprüche 1 bis 5, bei dem die genannte wenigstens eine Spitze (3, 11) zur Verwendung als Messsonde für optische Strahlung optimiert ist, die den Erhalt einer lateralen räumlichen Auflösung des Submikrontyps für optische Mikroskopieanwendungen mit hochauflösender Abtastung erlaubt.

10. Verfahren zur Herstellung von mit Linsen versehenen Monomoden- oder Multimoden-Lichtleitfasern nach einem der Ansprüche 1 bis 5 und 9, bei dem die fluoreszenten Partikel (19) in die polymerisierbare Formulierung der genannten wenigstens einen Spitze (3, 11) integriert sind, die sich nach der Fotopolymerisation wie eine lokalisierte Lichtquelle am Ende der genannten wenigstens einen Spitze (3, 11) verhält und von ein oder mehreren fluoreszierenden Partikeln (19) gebildet wird, die ausreichen, um im Nahfeld die optischen Eigenschaften einer Probe zu sondieren.

11. Verfahren zur Herstellung von mit Linsen versehenen Monomoden- oder Multimoden-Lichtleitfasern nach einem der Ansprüche 1 bis 5 und 9, bei dem eine metallische Schicht (17) auf der genannten wenigstens einen Polymerspitze (3, 11) ausgenommen einer am Ende der genannten wenigstens einen Spitze (3, 11) realisierten kreisförmigen Nanoöffnung (18) abgesetzt wird.

12. Verfahren zur Herstellung von mit Linsen versehenen Monomoden- oder Multimoden-Lichtleitfasern nach einem der Ansprüche 1 bis 5 und 9, bei dem eine metallische Schicht (17) auf der genannten wenigstens einen Polymerspitze (3, 11) abgesetzt wird, wobei die genannte, so metallisierte wenigstens eine Spitze (3, 11) ohne Nanoöffnung als Sensor für Oberflächenplasmonen verwendet wird, deren Charakteristiken durch Variieren des optischen Indexes des äußeren Mediums beispielsweise in Anwesenheit von chemischen oder biologischen Substanzen in Kontakt mit der Metallisierung der genannten wenigstens einen Spitze (3, 11) verändert werden.

13. Verfahren zur Herstellung von mit Linsen versehenen Monomoden- oder Multimoden-Lichtleitfasern nach einem der Ansprüche 1 bis 12, bei dem die Polymerisations-Photoinitiatoren der Formulierung für rote und nahe infrarote Wellenlängen empfindlich sind.

14. Verfahren zur Herstellung von mit Linsen versehenen Monomoden- oder Multimoden-Lichtleitfasern nach einem der Ansprüche 1 bis 13, bei dem der Belichtungsschritt durch Injektion der Lichtquelle in die genannte Faser erfolgt und bei dem eine Auswahl von einer oder mehreren Moden vor der Belichtung des Formulierungstropfens erfolgt, um neue, "Modenselektor" genannte Vorrichtungen zu realisieren, dank derer die wenigstens eine Spitze (3, 11) nur eine Ausbreitung dieser gewählten Moden zulässt.

15. Verfahren zum Anschließen von Monomoden- oder Multimoden-Lichtleitfasern durch Ausbilden von wenigstens einer Endspitze (3, 11) aus transparentem Polymer am Ende der Multimodenfaser.

16. Anschlussverfahren nach Anspruch 15, bei dem die Kontrolle von Abmessungen und Geometrie der genannten wenigstens einen Spitze (3, 11) die Realisierung von Anschlüssen von Fasern unter Anwendung des Verfahrens nach Anspruch 1 zulässt, wobei das fotopolymerisierende Licht (7) während des genannten Belichtungsschrittes an den Enden der beiden anzuschließenden Fasern injiziert wird, um einen Film (8) zu bilden, der den Kontakt zwischen den Fasern gewährleistet.

17. Anschlussverfahren nach Anspruch 15, bei dem Abmessungen und Geometrie der genannten wenigstens einen Spitze (3, 11) gewählt werden, um eine maximale optische Kopplung zwischen einer Faser (4) und einer Laserdiode (9) zu erhalten.
